# EUROPÄISCHE PATENTANMELDUNG

(11) **EP 0 631 860 A1**
(43) Veröffentlichungstag der Anmeldung: **04.01.1995**
(21) Anmeldenummer: 94108548.2
(22) Anmeldetag: 03.06.1994
(51) Int. Cl.: B32B 5/26, A61F 13/46

(54) **Flüssigkeitsabsorbierender Textilstoffverbund**

(30) Priorität: 04.06.1993 DE 4318500
(71) Anmelder: Köcher, Walter, Dr., D-95152 Selbitz (DE)
(72) Erfinder: Köcher, Walter, Dr., D-95152 Selbitz (DE)
(74) Vertreter: Weber, Dieter, Dr.

(57) **Zusammenfassung**

Ein flüssigkeitsabsorbierender Textilstoffverbund mit mehreren saugfähigen Textilmaterialbahnen weist
1. wenigstens eine flüssigkeitsansaugende, die angesaugte Flüssigkeit in alle Richtungen verteilende, von der Oberfläche zur Unterfläche abführende doppelschichtige Außenbahn,
2. wenigstens eine sich daran anschließende, Flüssigkeit weiterleitende Abstandshaltebahn und
3. wenigstens eine Flüssigkeit stärker als die Außen- und Abstandshaltebahnen absorbierende Speicherbahn auf.

## Beschreibung

In verschiedenen Lebensbereichen besteht die Notwendigkeit, Flüssigkeiten von einer Oberfläche, insbesondere von der Körperoberfläche von Menschen oder Tieren, gründlich und schnell abzuführen. Eine solche Notwendigkeit besteht beispielsweise im Sportbereich, wo man bei Sportlern oder Pferden Schweiß von der Haut schnell zu entfernen hat, da die Verdunstung sonst zu unerwünschten Abkühlungen führen würde. Insbesondere besteht ein solcher Bedarf aber im medizinischen Bereich, um Körperflüssigkeiten, wie Schweiß, Urin, Blut oder schwach alkalische bzw. schwach saure Lösungen von der Körperoberfläche oder überhaupt aus dem Körperbereich abzusaugen. Beispiele hierfür sind Inkontinente, Bettnässer, Dauerliegepatienten oder frisch Operierte, die in ihren Betten Körperflüssigkeiten abscheiden.

Es ist bekannt, saugfähige Textilmaterialien aus einer oder mehreren Textilmaterialbahnen zu fertigen, um Flüssigkeiten von schwitzenden Körperpartien oder nässenden Bezirken des Urogenitalbereichs oder Wundregionen zu entfernen. Solche bekannten Textilstoffe bestehen beispielsweise aus Baumwolle, Baumwollmischungen, Zellwolle, Zellstoff oder Mikrofaservliesen. Zum Schutz von Kleidung und Möbelstücken gegen austretende Flüssigkeit sind solche saugfähigen Materialien häufig mit einer flüssigkeitsdichten Schicht, z. B. aus Gummi oder Kunststoffolie, abgedeckt. Solche Textilmaterialien absorbieren die Flüssigkeit von der Körperoberfläche zwar schnell, doch bleibt die Haut des Anwenders unerwünscht lange dem nassen Medium ausgesetzt, was bei Luftbewegungen und resultierender Verdunstung zu gesundheitlichen Störungen führen kann. Im Krankenhausbereich müssen solche als Unterlagen verwendeten Materialien ständig gewechselt werden, wenn der Kranken nicht länger als zuträglich in der selbstproduzierten Nässe liegen soll.

Weiterhin sind auch Materialien bekannt, die unmittelbar nach der Einnässung Entfeuchtungsaktivitäten entwickeln und bereits nach zehn Minuten Einwirkungszeit nur noch ca. 3 bis 5 % physiologisch unbedenkliche Restfeuchte aufweisen. Solche Materialien, die vorwiegend im Hygienebereich und als Liegeunterlagen verwendet werden, enthalten Quellsalze aus modifizierten Acrylaten oder dergleichen, die ein Vielfaches ihres Eigengewichtes an Flüssigkeit aufnehmen. Der Nachteil solcher Materialien besteht darin, daß sie nur zu einmaligem Gebrauch geeignet und daher Wegwerfartikel sind, da die Flüssigkeitsaufnahme dieser Materialien irreversibel ist.

Die der Erfindung zugrundeliegende Aufgabe bestand nun darin, flüssigkeitsabsorbierende Materialien zu bekommen, die Flüssigkeit möglichst rasch von einer Oberfläche derart abziehen, daß ihr an diese Oberfläche angrenzender Bereich einen Restfeuchtigkeitswert von möglichst unter 5 % hat und sich daher "trocken" anfühlt, wobei dieses flüssigkeitsabsorbierende Material wiederverwendbar sein soll.

Erfindungsgemäß ist der flüssigkeitsabsorbierende Textilstoffverbund mit mehreren saugfähigen Textilmaterialbahnen dadurch gekennzeichnet, daß er
1. wenigstens eine flüssigkeitsansaugende, die angesaugte Flüssigkeit in allen Richtungen verteilende, von der Oberfläche zur Unterfläche dopppelschichtige Außenbahn,
2. wenigstens eine sich daran anschließende, Flüssigkeit weiterleitende Abstandshalterbahn und
3. wenigstens eine Flüssigkeit stärker als die Außen- und Abstandshalterbahnen absorbierende Speicherbahn aufweist.

Die doppelschichtige Außenbahn verteilt auf ihrer Oberfläche Flüssigkeiten, wie Körperflüssigkeiten, schnell in alle Richtungen, während die kapillaraktive Unterseite durch permanenten Flüssigkeitssog die Oberfläche trocken hält. Die Speicherbahn saugt die Flüssigkeit durch die Abstandshalterbahn hindurch und hält die Flüssigkeit. Die Restfeuchtigkeit der Außenfläche der Außenbahn liegt dadurch stets auf einem niedrigen Wert, wie unter 5 %, so daß auf der körpernahen Seite des Textilstoffverbundes das Gefühl eines "trockenen" Griffs entsteht und keine unangenehme Senkung der Hauttemperatur resultiert, während sich die Flüssigkeit in der körperfernen Textilbahn ansammelt. Überraschenderweise hat die Abstandshalterbahn die Funktion, daß die in der Speicherbahn angesammelte Flüssigkeit nicht wieder zurück in die Außenbahn gepreßt wird, selbst wenn auf den Textilstoffverbund nach der Erfindung Druck ausgeübt wird, wie im Falle der Verwendung als Liegeunterlage.

Der erfindungsgemäße Textilstoffverbund ist nicht auf die obengenannten drei Arten von Textilmaterialbahnen beschränkt, sondern kann zusätzliche Bahnmaterialien enthalten, die aber für die Erfindung nicht wesentlich sind. Beispielsweise kann der Textilstoffverbund auf der Außenseite der Speicherschicht mit einer flüssigkeitsundurchlässigen Kunststoffolie oder Gummischicht überdeckt sein, um einen Austritt von Flüssigkeit an der körperfernen Oberfläche zu verhindern.

In dem erfindungsgemäßen Texilstoffverbund können die einzelnen Bahnmaterialien lose übereinandergelegt werden, was jedoch vielfach, insbesondere bei Liegeunterlagen für Krankenhäuser, das Richten erschwert. Aus diesem Grund können die einzelnen Bahnmaterialien insgesamt oder teilweise, vollflächig oder örtlich, wie entlang den Rändern, miteinander verbunden sein. Die erfindungsgemäßen Bahnen können, wenn sie nicht frei übereinanderliegen, als Schichten textiltechnisch aneinander angewirkt, angewebt oder auf andere bekannte Weise miteinander verbunden werden. Die Bahnen können aber auch beispielsweise durch Ultraschall, Nähwirktechnik, Steppstichtechnik, durch Klebemethoden oder anderweitig miteinander verbunden werden.

Im Falle, daß nach häufiger Benutzung die Materialien weggeworfen werden sollen, ist es erwünscht, die einzelnen Materialien recyclen zu können. Für diesen Fall ist es erwünscht, die einzelnen Bahnen oder Schichten sortengleich miteinander zu verbinden, wie beispielsweise die Baumwollschichten untereinander und die Polyesterschichten untereinander, wobei die sortenfremden Schichten untereinander jedoch nicht verbunden werden.

Die aufgenommene Flüssigkeit in allen Richtungen verteilende Außenbahn besitzt auf ihrer äußeren Oberfläche, die in Berührung mit der zu trocknenden Oberfläche, wie menschlicher Haut, kommt, zweckmäßig eine Aufrauhung, die das Trockenheitsgefühl dieser Oberfläche noch verstärkt, da eine aufgerauhte Außenschicht nicht vollflächig an der Körperhaut anliegt.

Diese Außenschicht besteht zweckmäßig aus einem flüssigkeitsdurchlässigen Zweiflächenstoff, wobei die im Inneren des Verbundes liegende Fläche günstigerweise aus Mikrofasergarnen besteht, die der Außenfläche permanent Nässe entziehen. Solche auf gebräuchlichen Textilmaschinen herstellbare Zweiflächenstoffe verteilen die Flüssigkeit schnell und gleichmäßig in alle horizontalen Richtungen und vertikalen Richtungen und entziehen der Oberfläche Flüssigkeit durch hohe Kapillaraktivität der Mikrofasergarne (z. B. 100 f 88 bzw. 152 f 252). Die beiden Flächen sind in diesem Fall vollflächig miteinander verbunden.

Beispiele für solche Zweiflächenstoffe sind solche mit einer oberen Fläche aus einem Polyestergarn 25 f 22 und einer unteren Fläche aus Polyestermikrogarn, z. B. Polyester 100 f 88 oder 152 f 252.

Solche an sich bekannten Zweiflächenstoffe haben Flüssigkeitsaufnahmekapazitäten bis etwa 650 g/m², sind aber hinsichtlich Druckbelastungen instabil, so daß die aufgenommene Flüssigkeit durch Druck ganz oder teilweise wieder hinausgedrückt wird. Bei dem erfindungsgemäßen Verbund wird die Flüssigkeit aber durch die Abstandshalterbahn hindurch in die Speicherschicht gedrückt und in dieser absorbiert.

Einen ähnlichen Effekt wie mit Hilfe der geschilderten Zweiflächenstoffe bekommt man, wenn man an deren Stelle zwei einzelnen textiltechnisch nicht verbundene Flächengebilde verwendet, die analog dem Zweiflächenstoff aufgebaut sind. Beispielsweise kann als flüssigkeitsaufnehmende Seite ein aufgerauhter, hydrophober, flüssigkeitsdurchlässiger Velourstoff aus Polyestergarn 25 f 22 verwendet werden, der mit einem aus Polyestermikrofasergarn hergestellten Stoff hinterlegt ist.

Die Abstandshalterbahn dient einerseits der Weiterleitung der von der Außenbahn aufgesaugten Flüssigkeit zu der Speicherbahn, andererseits aber der Verhinderung eines Flüssigkeitsrückflusses von der Speicherbahn zur Außenbahn. Daß ein solcher Flüssigkeitsrückfluß ganz oder zumindest weitgehend verhindert wird, selbst bei Ausübung eines Druckes auf den Textilstoffverbund nach der Erfindung, ist überraschend. Diese Eigenschaft des erfindungsgemäßen Verbundes ist für das Wohlbefinden und die Gesundheit von Dauerliegepatienten, die mit ihrem Körpergewicht den Verbund langfristig belasten, von größter Bedeutung.

Die Abstandshalterbahn kann beispielsweise aus Abstandsgewirken von der Doppelraschel bestehen, deren eine Nadelbarre aus normalem Polyestergarn, z. B. 25 f 22, die gegenüberliegende dagegen aus Polyestermikrogarn gewirkt ist, wobei der eigentliche Abstandshalter beispielsweise aus monofilen Polfäden, wie 53 dtex f 1, besteht. Diese Abstandshalterbahn kann aber auch aus einem groblöchrigen Tüllstoff bestehen, vorzugsweise aus einem normaltitrigen Polyestergarn als Oberseite und einem Polyestermikrogarn als Unterseite. Schließlich kann diese Bahn auch aus den unterschiedlichsten textilen Flächengebilden bestehen, die infolge ihres Querschnitts den Abstand der Außenbahn von der Speicherbahn ergeben und die Flüssigkeit von der Außenbahn zur Speicherbahn weiterleiten, wie Plüschstoffe von der Rundstrickmaschine, deren Plüschhenkel aus normaltitrigem Polyestergarn und deren Grundbindung aus Polyestermikrogarn bestehen.

Die Speicherbahn ist der eigentliche Flüssigkeitsabsorber des erfindungsgemäßen Textilstoffverbundes, wobei ihre Speicherkapazität letztlich die Feuchtigkeitsbelastbarkeit des Systems bestimmt. Mit zunehmendem Gewicht dieser Bahn wird nach einer Faustregel die Feuchtigkeitsabsorption des erfindungsgemäßen Verbundes gesteigert.

Die Speicherbahnen können vollflächig mit dem Textilverbund nach der Anmeldung oder mit einer zusätzlich anzubringenden nässeundurchlässigen Folienbahn oder auch streifenförmig übereinandergelegt, eingenäht, eingeschweißt oder auf andere Weise verbunden werden.

Bevorzugte Materialien für die Speicherschicht sind Stoffe oder Vliese aus Baumwolle oder Zellwolle, modifizierter Zellwolle oder speziellen Mikrofaserkonstruktionen.

Die folgenden Beispiele dienen der weiteren Erläuterung der Erfindung.

Zur Bestimmung des für die Qualität des Erfindungsstoffes wesentlichen Restfeuchtegehaltes wurde folgendes Aggregat entwickelt:

Ein Metallstempel in der Größe von 50 cm² drückt mit einem Hubdruck von 0,2 bar auf den Prüfling. Die Frequenz der Hubbewegung liegt bei 70 Hz. Nach 5minütiger dynamischer Druckbelastung wird der Prüfling aus dem Aggregat genommen und ein 50 cm² großes saugfähiges Löschpapier mit einem statischen Druck von 200 m/m² für die Dauer von 10 min auf die Hautberührungsseite des Prüflings aufgelegt. Die Nässeaufnahme des Löschpapiers ist die Basis Errechnung der Restfeuchtigkeitsprozente der Oberfläche des Erfindungsgegenstandes.

Diese mit der beschriebenen Schnelltestmethode ermittelten Restfeuchtigkeitswerte sind wesentliche Kennzahlen für den zu erwartenden Anwendungskomfort des Schichtstoffes nach der Erfindung.

### Beispiel 1

Die Außenbahn ist ein Zweiflächenstoff von der Kettwirkmaschine E 28. Die im Gebrauch dem Körper zugewandte aufgerauhte Fläche besteht aus einem Polyestergarn 25 f 22. Rückseitig ist eine Fläche aus Polyestermikrogarn 100 f 88 angewirkt. Bei einem Gesamttiter von 125 dtex weist diese Bahn ein Gewicht von ca. 200 g/m² auf.

Unter der Außenbahn liegt als Abstandshalterbahn ein Polyestertüllstoff mit einem Gewicht von ca. 100 g/m² aus Polyestergarn 25 f 22, der auf einer Kettwirkmaschine E 28 hergestellt ist und etwa 75 Löcher pro Quadratinch aufweist.

Die Speicherbahn ist ein auf der Rundstrickmaschine 18er Teilung mit 3,7er Platine hergestellter Plüschstoff mit einem Gewicht von 275 g/m², dessen Grundlegung aus 17 % Polyestergarn 110 dtex und dessen Plüschlegung aus 83 % im Ringspinnverfahren hergestellter Baumwolle Nm 40 (= 83 %) besteht.
Restfeuchte 3,9 %.

### Beispiel 2

Die Außenbahn ist ein Zweiflächenschichtstoff von der Kettwirkmaschine E 28. Die im Gebrauch dem Körper zugewandte aufgerauhte Fläche besteht aus einem Polyestergarn 25 f 22. Rückseitig ist eine Fläche aus 152 f 272 Polyestermikrogarn angewirkt. Bei einem Gesamttiter von 202 dtex weist die Bahn ein Gewicht von ca. 225 g/m² auf.

Die Abstandshalterbahn ist ein Abstandsgewirke von der zweinadelbarrigen Raschel mit einem Gewicht von ca. 75 g/m² mit einem Querschnitt von ca. 2 mm. Der zwischen den Nadelbarren liegende abstandhaltende Polfaden ist ein monofiles Polyestergarn in der Stärke von 53 f 1. Die der Außenbahn zugewandte Seite des Abstandsgewirkes ist aus einem Polyestergarn 25 f 22, die der Speicherbahn zugewandte Fläche aus einem Polyestermikrogarn 100 f 88 hergestellt.

Die Speicherbahn ist ein von der 18er Rundstrickmaschine unter Verwendung einer 3,7er Platine aus modifizierten saugfähigen Zellwollgarnen hergestellter Plüschstoff mit einem Gewicht von ca. 310 g/m².

Im Falle einer Durchnässung von 400 g/m² beträgt die Restfeuchte ca. 5,1 %.

### Beispiel 3

Als Außenbahn wird ein Polyestervelour von der Kettwirkmaschine E 28 mit einem Gewicht von etwa 100 g/m² rückseitig mit einem ca. 130 g/m² schweren Polyestermikrogarngestrick von der 28er Rundstrickmaschine vollflächig abgedeckt. Diese aus zwei Flächen bestehende Bahn ist mit einer Abstandshalterbahn hinterlegt, die aus einem Polyesterplüschstoff mit einem Gewicht von ca. 140 g/m² besteht. Der aufgrund seiner Konstruktion mäßig hydrophile Plüschhenkel aus Polyestergarn dtex 50 texturiert wird sofort von einer kapillaraktiven Grundlegung aus 152 f 272 entwässert, und die sich hier sammelnde Nässe wird unmittelbar an die darunterliegende Speicherbahn abgegeben, die in diesem Anwendungsbeispiel aus doppelseitig gewebtem Baumwollstoff mit einem Gewicht von 310 g/m² besteht.
Dei Restfeuchte beträgt 3,7 %.

### Beispiel 4

Ein elastischer, von der Rundstrickmaschine 28er Teilung hergestellter Plattierstoff mit einem Gewicht von ca. 220 g/m² besteht aus einer angerauhten Oberseite aus Polyester 25 f 22 und einer Unterseite aus Polyestermikrogarn 100 f 88 und hat bei einem Gesamttiter von 125 dtex ein Gewicht von ca. 200 g (Außenbahn).

Die Abstandshalterbahn besteht aus einem Plattierstoff, von der Ruckstrickmaschine hergestellt, mit einem Gewicht von ca. 120 g/m², der aus einem Polyestergarn 110 dtex und einem Baumwollgarn Nm 50 im Gewichtsverhältnis von ca. 30/70 % besteht. Die Baumwollseite wird an die Speicherbahn angelegt.

Diese ist ein von der Rundstrickmaschine 18er Teilung hergestellter Baumwollplüsch mit einem Gewicht von 300 g/m² mit einem Anteil von ca. 14 % Polyester im Grund und 86 % Baumwolle im Plüsch.

Mittels Ultraschalltechnik ist eine nässeundurchlässige Schicht aus einem kochwaschfesten Polyurethan mit einem Gewicht von ca. 90 g/m² an die Schicht angeschweißt.
Restfeuchte 2,92 %.

## Patentansprüche

1. Flüssigkeitsabsorbierender Textilstoffverbund mit mehreren saugfähigen Textilmaterialbahnen, **dadurch gekennzeichnet**, daß er
1. wenigstens eine flüssigkeitsansaugende, die angesaugte Flüssigkeit in alle Richtungen verteilende, von der Oberfläche zur Unterfläche abführende doppelschichtige Außenbahn,
2. wenigstens eine sich daran anschließende, Flüssigkeit weiterleitende Abstandshalterbahn und
3. wenigstens eine Flüssigkeit stärker als die Außen- und Abstandshalterbahnen absorbierende Speicherbahn aufweist.

2. Textilstoffverbund nach Anspruch 1, **dadurch gekennzeichnet**, daß die Außenseite der Außenbahn aufgerauht ist.

3. Textilstoffverbund nach Anspruch 1 oder 2, **dadurch gekennzeichnet**, daß die Außenbahn aus einem Zweiflächenstoff oder zwei nicht miteinander verbundenen Flächen besteht, deren innere aus einem Mikrofasergarn gefertigt ist.

4. Textilstoffverbund nach Anspruch 3, **dadurch gekennzeichnet**, daß die Außenbahn auf ihrer Oberfläche aus einem Polyestervelour und darunter aus einem Polyestermikrogarngestrick besteht.

5. Textilstoffverbund nach einem der Ansprüche 1 bis 4, **dadurch gekennzeichnet**, daß die Abstandshalterbahn aus einem Tüllstoff aus hydrophobem Textilmaterial besteht.

6. Textilstoffverbund nach einem der Ansprüche 1 bis 4, **dadurch gekennzeichnet**, daß die Abstandshalterbahn aus einem Gewirke von der zweinadelbarrigen Raschelmaschine besteht, für deren eine der Außenbahn zugewandten Seite Normaltitergarn 25 f 22 und für die andere Seite ein Mikrofasergarn 152 f 252 und für den abstandshaltenden Polfaden ein Polyestergarn 53 f 1 eingewirkt ist.

7. Textilstoffverbund nach einem der Ansprüche 1 bis 4, **dadurch gekennzeichnet**, daß die Abstandshalterbahn aus einem flüssigkeitsdurchlässigen Maschenstoff besteht, dessen die Außenbahn berührende Fläche aus texturiertem Polyestergam und dessen die Speicherbahn berührende Fläche aus Mikrofasergarn besteht.

8. Textilstoffverbund nach einem der Ansprüche 1 bis 7, **dadurch gekennzeichnet**, daß die Speicherbahn aus einem polyesterfreien Baumwoll- oder Zellwollstoff besteht.

9. Textilstoffverbund nach einem der Ansprüche 1 bis 7, **dadurch gekennzeichnet**, daß die Speicherbahn aus einem Baumwollplüschstoff mit Polyestergarn als Grundbindung besteht.

10. Textilstoffverbund nach einem der Ansprüche 1 bis 9, **dadurch gekennzeichnet**, daß die einzelnen Bahnen insgesamt oder teilweise vollflächig oder örtlich miteinander verbunden sind.

11. Textilstoffverbund nach einem der Ansprüche 1 bis 9, **dadurch gekennzeichnet,** daß die einzelnen Bahnen getrennt voneinander vorliegen.

12. Textilstoffverbund nach einem der Ansprüche 1 bis 11, **dadurch gekennzeichnet,** daß die Speicherbahn auf ihrer Außenseite mit einer Kunststoffolie verbunden ist.
